# EUROPEAN PATENT APPLICATION

(11) **EP 4 254 283 A1**
(43) Date of publication of application: **04.10.2023**
(21) Application number: 23160662.5
(22) Date of filing: 08.03.2023
(51) Int. Cl.: G06Q 10/0631

(54) **PLANT SYSTEM, PLANT CONTROL METHOD, AND PLANT CONTROL PROGRAM**

(30) Priority: 30.03.2022 JP 2022057388
(71) Applicant: Yokogawa Electric Corporation, Musashino-shi, Tokyo 180-8750 (JP)
(72) Inventor: YOSHIMURA, Eirou, Musashino-shi, Tokyo, 180-8750 (JP); KURIYAMA, Kan-e, Musashino-shi, Tokyo, 180-8750 (JP); HIROOKA, Isao, Musashino-shi, Tokyo, 180-8750 (JP)
(74) Representative: Hoffmann Eitle

(57) **Abstract**

A CI server 10 includes an acquisition unit that acquires first information from a plant 5 and acquires second information from a source other than the plant 5, a determination unit that determines a setting value of the plant 5 and a first condition for reflecting the setting value in the plant 5 based on the first information and the second information, and a transmission unit that transmits the setting value and the first condition to the plant 5. The plant 5 operates based on the setting value and the first condition.

## Description

### BACKGROUND OF THE INVENTION

### 1. Field of the Invention

The present invention relates to a plant system, a plant control method, and a plant control program.

### 2. Description of the Related Art

In various plants using petroleum, petrochemistry, chemistry, gas, or the like, various measures are taken for safe operation. For example, a monitoring technology of monitoring various kinds of equipment, such as facilities, apparatuses, and sensors, a simulation technology of calculating a control value for controlling operation of the plant by using actual measurement values of various kinds of equipment or the like and predicting a state of the plant, and the like are known.
Patent Document 1: Japanese Laid-open Patent Publication No. 2019-220220
Patent Document 2 : Japanese Laid-open Patent Publication No. 2004-362256
Patent Document 3: Japanese Laid-open Patent Publication No. 2018-112829
Patent Document 4: Japanese Laid-open Patent Publication No. 2020-140253

However, in the simulation technology as described above, a setting value is determined by using only data that is obtained inside the plant, and therefore, the setting value is not always appropriate. The reason for this is that, in some cases, an operation plan need to be reviewed due to a certain factor, such as an environment in which the plant is installed, demand and supply conditions, or a change in material prices, that occurs outside the plant.

Furthermore, in some cases, the setting value that is determined by the simulation technology as described above is not always appropriate at a timing at which the setting value is reflected in operation of the plant. This is because an appropriate timing of reflecting the setting value in the operation of the plant may be affected by not only a factor inside the plant, but also a factor outside the plant.

From these viewpoints, in the simulation technology as described above, in some cases, it is not always possible to realize a preferable operation state of the plant.

An object of the present invention is to realize a more preferable operation state of the plant.

### SUMMARY OF THE INVENTION

According to one aspect of embodiments, a plant system includes a plant and a cloud server, the cloud server includes: an acquisition unit configured to acquire first information from the plant and acquire second information from a source other than the plant; a determination unit configured to determine a setting value of the plant and a first condition for reflecting the setting value in the plant based on the first information and the second information; and a transmission unit configured to transmit the setting value and the first condition to the plant, wherein the plant operates based on the setting value and the first condition.

According to one aspect of embodiments, a plant control method includes:
acquiring, by a cloud server, first information from a plant; acquiring, by the cloud server, second information from a resource other than the plant; determining, by the cloud server, a setting value of the plant and a first condition for reflecting the setting value in the plant based on the first information and the second information; transmitting, by the cloud server, the setting value and the first condition to the plant, and operating, by the plant, based on the setting value and the first condition.

According to one aspect of embodiments, a plant control program causes a cloud server to execute a process including: acquiring first information from a plant; acquiring second information from a resource other than the plant; determining a setting value of the plant and a first condition for reflecting the setting value in the plant based on the first information and the second information; and transmitting the setting value and the first condition to the plant.

### BRIEF DESCRIPTION OF THE DRAWINGS

FIG. 1 is a diagram illustrating an example of an overall configuration of an integrated management system;
FIG. 2 is a diagram illustrating the flow of a process performed by the integrated management system;
FIG. 3 is a functional block diagram illustrating a functional configuration of a CI server;
FIG. 4 is a flowchart illustrating the flow of a plant control process;
FIG. 5 is a schematic diagram illustrating an operation example of an acquisition unit;
FIG. 6 is a schematic diagram illustrating an operation example of a determination unit;
FIG. 7 is a schematic diagram illustrating an example of input of a process value to a simulator;
FIG. 8 is a schematic diagram illustrating an operation example of the acquisition unit;
FIG. 9 is a schematic diagram illustrating an operation example of the determination unit; and
FIG. 10 is a diagram for explaining a hardware configuration example.

### DETAILED DESCRIPTION OF THE PREFERRED EMBODIMENTS

Embodiments of a plant system, a plant control method, and a plant control program according to the present application will be described below with reference to the accompanying drawings. Each of the embodiments illustrate only one example or one aspect, and ranges of numeral values and functions, use scenes, and the like are not limited by the examples. In addition, the embodiments may be combined appropriately as long as processing contents do not conflict with each other.

### Overall configuration

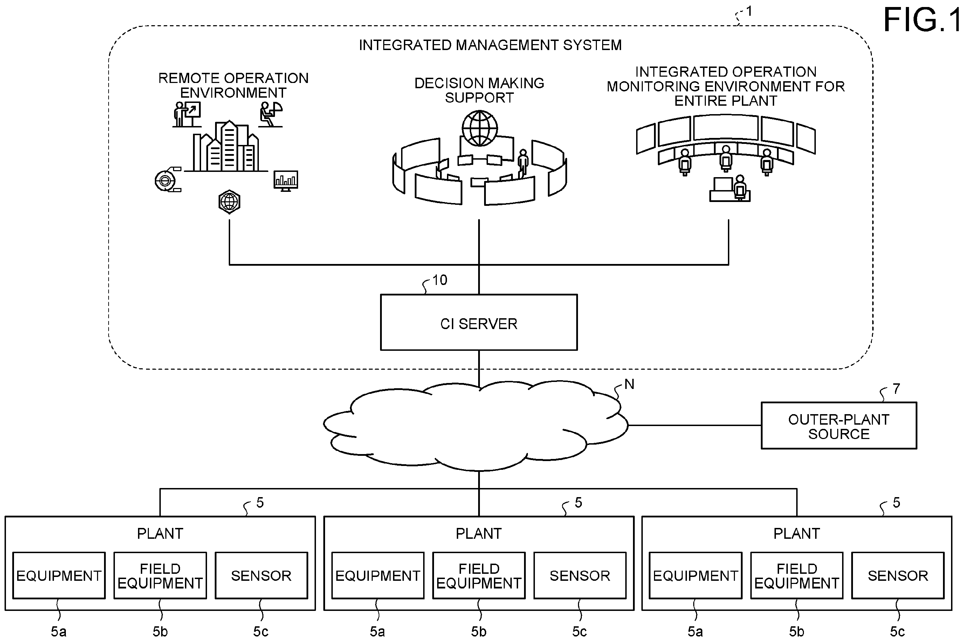

FIG. 1 is a diagram illustrating an example of an overall configuration of an integrated management system 1. As illustrated in FIG. 1, the integrated management system 1 includes a collaborative information (CI) server 10 and is connected to each of plants 5 via a network N. Meanwhile, various communication networks, such as a dedicated line, the internet, or a long term evolution (LTE) network, may be adopted as the network N.

The integrated management system 1 is a system that integrally manages the plurality of plants 5, and may be implemented by a physical server or may be implemented by a virtual machine using a cloud system or the like.

The CI server 10 is one example of an information processing apparatus, such as a cloud server, that is connected to various devices and systems in the plants 5 and integrally manages the various devices and the systems. Specifically, the CI server 10 provides a remote operation environment, a service for decision making support, and an integrated operation monitoring environment for the entire plant.

For example, the remote operation environment provides, for each of the plants 5, a monitoring system for managing a state of the plant or the like, and provides services, such as notification of an alarm or notification to an operator. The decision making support provides, for each of the plants 5, a simulation of the state of the plant 5 and a control value in the plant 5, and a service, such as operation control on the plant 5 or notification to the operator. The integrated operation monitoring environment integrally monitors the plurality of plants 5, and provides services, such as management of products by the plants, supply control, or cost management, over all of the plants 5. In this manner, the CI server 10 is able to notify a specified user of a warning, transmit various kinds of information, optimize information management for overall production activity, and support safe and effective operation.

Each of the plants 5 is one example of various kinds of plants using petroleum, petrochemistry, chemistry, gas, or the like, and includes factories or the like that include various facilities for obtaining products. Examples of the products include liquefied natural gas (LNG), resin (plastic, nylon, and the like), and chemical products. Examples of the facilities include factory facilities, machine facilities, production facilities, power generation facilities, storage facilities, and facilities at wellheads from which petroleum, natural gas, or the like is mined.

Inside of each of the plants 5 is constructed by using a distributed control system (DCS) (not illustrated) or the like, and operation of equipment 5a, field equipment 5b, a sensor 5c, and the like is controlled. For example, a control system in each of the plants 5 performs various kinds of control on a controlled device, such as the field equipment 5b, that is installed in a facility to be controlled, an operating device corresponding to the facility to be controlled, or the like, by using process data that is used in the plant 5.

Meanwhile, the equipment 5a includes, for example, an alarm unit, such as a speaker, that issues an alarm, a transport path that is used to transport a product produced by the plant 5, or the like. The field equipment 5b includes a valve, a pump, a fan, and the like that are driven by a motor, an actuator, or the like. The sensor 5c includes a device, such as a pressure sensor, a temperature sensor, a flow rate sensor, a pH sensor, a velocity sensor, or an acceleration sensor that acquires, detects, or measures a physical amount, for example.

Further, data that is generated inside the plant 5 and collected by the CI server 10 includes control data, such as a process value PV, a setting value SV, and a manipulated value MV. The process value PV is data that indicates a state of a process in the plant 5. The process value PV is acquired by, for example, the corresponding field equipment 5b. Examples of the process value PV include pressure, temperature, a flow rate, a pH value, a velocity, and acceleration.

The setting value SV is data (target value) that indicates a target of the process value PV in the plant 5. The setting value SV is given to a simulation for controlling operation of the plant 5, and is used to control the plant 5, for example. Examples of the setting value SV include, similarly to the process value PV, pressure, temperature, a flow rate, pH, velocity, and acceleration. The manipulated value MV is data that indicates manipulation in the plant 5. The manipulated value MV may be acquired from the corresponding field equipment 5b or may be given to the field equipment 5b after execution of a simulation, for example. The field equipment 5b operates in accordance with the given manipulated value MV. Examples of the manipulated value MV include a valve operation amount (for example, a degree of opening of a valve), a pump operation amount, and a fan operation amount.

In the system configuration as described above, the CI server 10 acquires data that is related to operation of the plant 5 and that is attached with attribute information indicating the state of the device, from each of the devices, such as the equipment 5a, the field equipment 5b, and the sensor 5c, that are used for the operation of the plant 5. Further, the CI server 10 is able to classify the data by the attribute information on the acquired data, and perform the operation of the plant 5 by using the data that is classified by each attribute information.

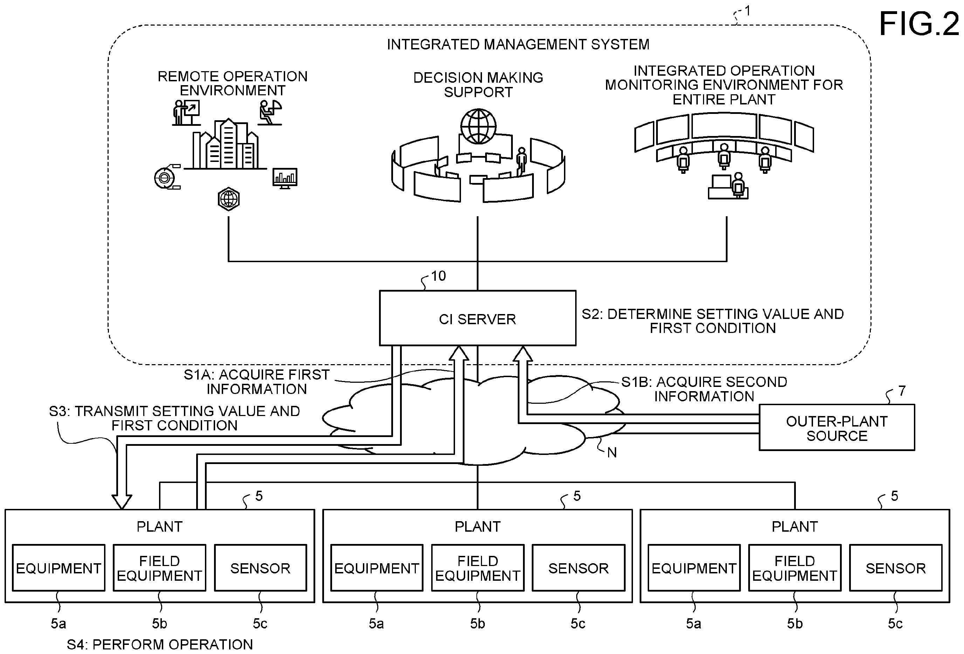

Here, the integrated management system 1 according to the present embodiment realizes a preferable operation state of the plant 5 by performing a process as illustrated in FIG. 2. FIG. 2 is a diagram illustrating the flow of the process performed by the integrated management system 1. FIG. 2 illustrates control of one of the three plants 5 as only one example, but the number of the plants 5 to be controlled by the CI server 10 is not limited to one.

As illustrated in FIG. 2, the CI server 10 acquires first information, such as a current setting value, on the field equipment 5b from the plant 5 (Step S1A). Further, the CI server 10 acquires, from an outer-plant source 7 that is a source other than the plant 5, second information, such as a sales volume and a demand forecasting of a product that is being manufactured by the plant 5 and a weather forecast (Step S1B).

Here, the CI server 10 determines a setting value and a first condition for reflecting the setting value in the plant 5, on the basis of the first information that is acquired at Step S1A and the second information that is acquired at Step S1B (Step S2). Thereafter, the CI server 10 transmits the setting value and the first condition that are determined at Step S2 to the plant 5 (Step S3). Then, the plant 5 operates based on the setting value and the first condition that are transmitted at Step S3 (Step S4).

In this manner, the CI server 10 determines the setting value that is reflected in the plant 5, on the basis of the first information and the second information, so that it is possible to determine the setting value in accordance with a factor, such as an environment in which the plant 5 is installed, demand and supply conditions, or a change in material prices, that occurs outside the plant 5. Furthermore, the CI server 10 determines the first condition for reflecting the setting value in the plant 5, on the basis of the first information and the second information, so that it is possible to determine the first condition while taking into account not only a factor inside the plant 5, but also an influence of a factor outside the plant 5.

Therefore, according to the integrated management system 1 of the present embodiment, it is possible to realize a more preferable operation state of the plant 5.

### Functional configuration

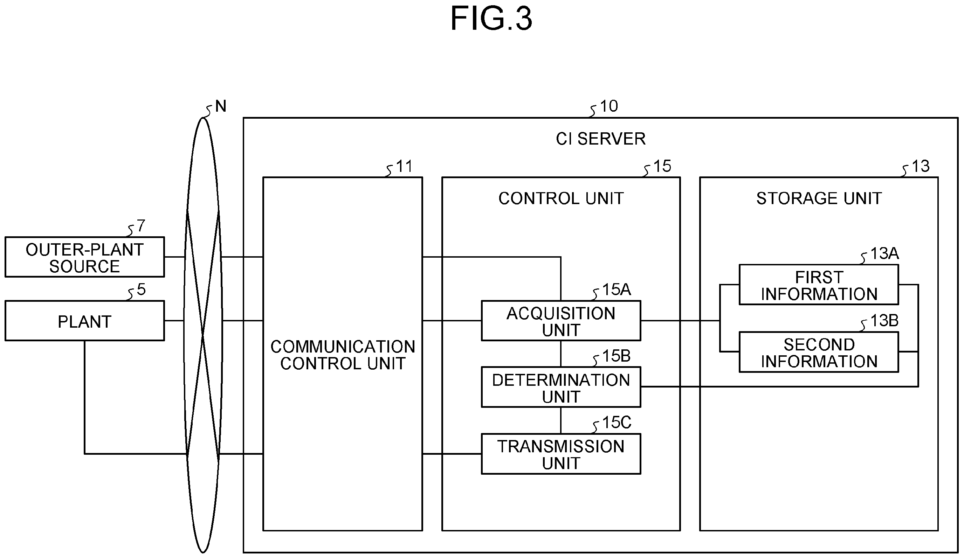

FIG. 3 is a block diagram illustrating a functional configuration of the CI server 10. Meanwhile, in the following, an example will be described, as one example, in which the CI server 10 provides a remote operation environment, a service for supporting decision making, and an integrated operation monitoring environment for the entire plant, but each of the services may be executed by different apparatuses.

A communication control unit 11 is a functional unit that controls communication with a different device, such as a device in the plant 5. As one example, the communication control unit 11 may be implemented by a network interface card, such as a LAN card. As one aspect, the communication control unit 11 receives the first information from the plant 5 and receives the second information from the outer-plant source 7. As another aspect, the communication control unit 11 outputs the setting value of the field equipment 5b or the like to the plant 5.

A storage unit 13 is a functional unit that stores therein various kinds of data. As one example, the storage unit 13 is implemented by an internal storage of the CI server 10, an external storage, or an auxiliary storage. For example, the storage unit 13 stores therein first information 13A and second information 13B. Meanwhile, explanation of the first information 13A and the second information 13B will be given below together with explanation of storage of the first information 13A and the second information 13B in the storage unit 13.

A control unit 15 is a functional unit that controls the entire CI server 10. For example, the control unit 15 may be implemented by a hardware processor. As illustrated in FIG. 3, the control unit 15 includes an acquisition unit 15A, a determination unit 15B, and a transmission unit 15C. Meanwhile, the control unit 15 may be implemented by a hard-wired logic.

The acquisition unit 15A is a processing unit that acquires the first information from the plant 5 and acquires the second information from a source other than the plant. For example, the first information may be a current setting value of the field equipment 5b in the plant 5, or the like. Further, the second information may be information on a sales volume and a demand forecasting of a product that is being manufactured by the plant 5 and a weather forecast. The first information and the second information that are acquired as described above are stored by being added to the first information 13A and the second information 13B that are stored in the storage unit 13.

The determination unit 15B is a processing unit that determines the setting value of the plant 5 and the first condition for reflecting the setting value in the plant 5, on the basis of the first information and the second information. As one example, the first condition may be a timing of reflecting a changed setting value in the plant. The "timing" described herein is not always limited to a time or an equivalent of the time, but may be an arbitrary condition related to the plant 5.

The transmission unit 15C is a processing unit that transmits the setting value and the first condition to the plant 5. As one example, the transmission unit 15C is able to transmit the setting value and the first condition to the plant 5 when the determination unit 15B determines the setting value and the first condition. In this case, it is possible to allow the plant 5 to make a condition judgement about whether the first condition is met. As another example, the transmission unit 15C is able to monitor whether the first condition that is determined by the determination unit 15B is met, and transmit the setting value to the plant 5 at the time the first condition is met. In this case, it is possible to allow the CI server 10 to make a condition judgement about whether the first condition is met.

### Flow of process

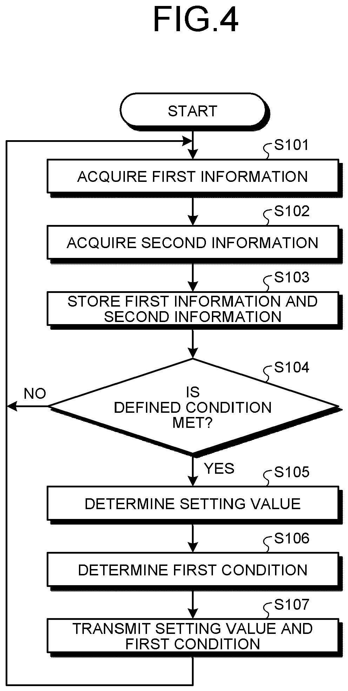

FIG. 4 is a flowchart illustrating the flow of a plant control process. As illustrated in FIG. 4, the acquisition unit 15A acquires the first information from the plant 5 and acquires the second information from the outer-plant source 7 (Step S101 and Step S102).

The first information that is acquired at Step S101 and the second information that is acquired at Step S102 as described above are stored by being added to the first information 13A and the second information 13B that are stored in the storage unit 13 (Step S103).

Here, the determination unit 15B determines whether a condition that is defined as a trigger for performing processes at Step S105 and Step S106 is met (Step S104). As an example of the "condition" as described above, if setting is made such that a process is performed at regular intervals, for example, at hourly intervals, it is determined whether the predetermined period has elapsed since previous execution. In addition, if setting is made such that the process is performed at a fixed time, such as at nine o'clock in the morning, at twelve o'clock at noon, or at six o'clock in the evening, it is determined whether a current time is the fixed time.

If the condition that is defined as described above is met (Yes at Step S104), the determination unit 15B determines the setting value of the plant 5 and the first condition for reflecting the setting value in the plant 5, on the basis of the first information and the second information (Step S105 and Step S106). Thereafter, the transmission unit 15C transmits the setting value and the first condition to the plant 5 (Step S107), and goes to the process at Step S101.

### First specific example

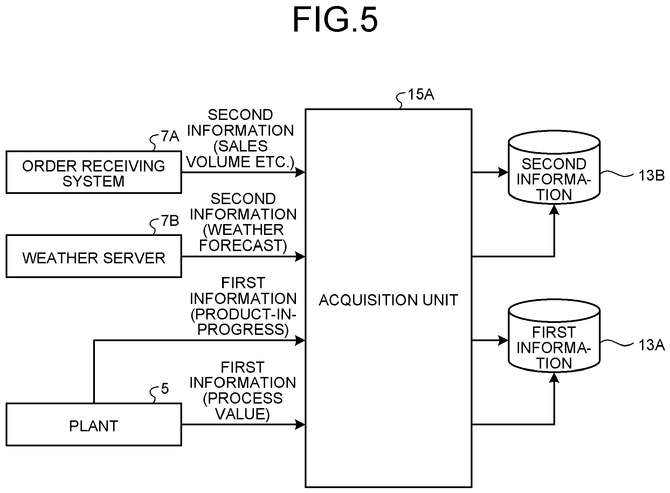

Specific examples of control on the plant will be described below. FIG. 5 is a schematic diagram illustrating an operation example of the acquisition unit 15A. FIG. 5 illustrates, as examples of the outer-plant source 7, an order receiving system 7A that receives an order of a product that is to be manufactured by the plant 5 and a weather server 7B that releases whether information on a weather forecast or the like.

As illustrated in FIG. 5, the acquisition unit 15A acquires, as one example of the first information, a process value or the like of the field equipment 5b from the plant 5. Furthermore, the acquisition unit 15A acquires, as another example of the first information, information, such as a brand, on a product (hereinafter, described as a "product-in-progress") that is being manufactured by the plant 5. Information on the process value and the information on the product-in-progress that are acquired as described above is added to the first information 13A that is stored in the storage unit 13.

Meanwhile, when the first information is acquired from the plant 5, it may be possible to acquire the first information from the plant 5 in real time or acquire data of a certain period by batch processing. For example, as an example of the process value, it may be possible to acquire time series data of the process value, as the process data, from a plant information management system (PIMS).

The acquisition unit 15A acquires, as one example of the second information, a sales volume of a product from the order receiving system 7A. The information that is acquired from the order receiving system 7A as described above may be sales performance based on a history, may be an order volume of already received orders, may be the number of cancelled orders indicating cancellation of orders, or may be all of the above-described information. In the following, the sales volume, the order volume, the number of cancelled orders, and the like may be collectively described as a "sales volume, etc".

As another example of the second information, the acquisition unit 15A acquires a weather forecast or the like from the weather server 7B. A target of the weather forecast that is acquired at this time may include all of matters related to a calendar that is published by the weather server 7B, may be narrowed down in a range that may affect manufacturing, or may be a difference from a target that is adopted at the time of previous access to the weather server 7B.

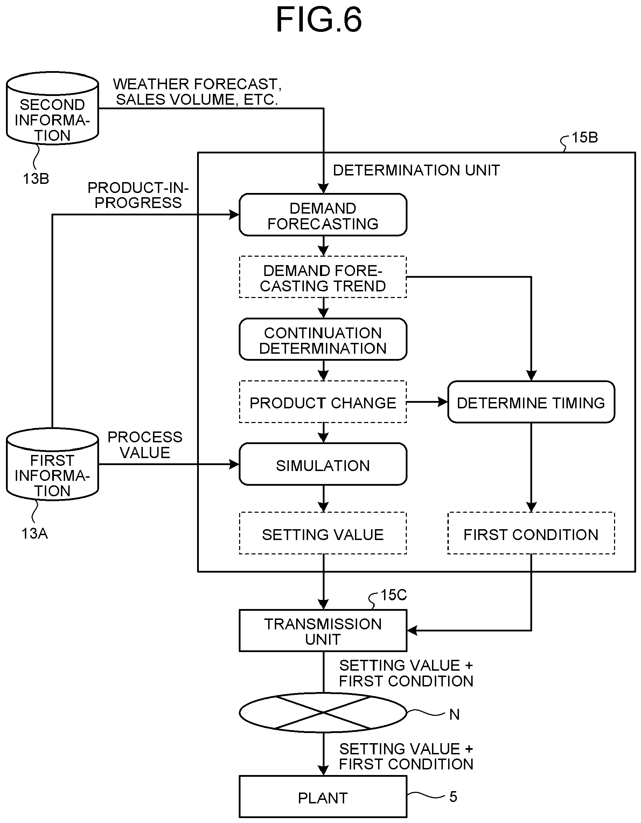

Information on the sales volume etc., the weather forecast, and the like that are acquired as described above is added to the second information 13B that is stored in the storage unit 13. In the environment in which the first information and the second information as described above are acquired, the determination unit 15B determines the setting value and the first condition through operation as illustrated in FIG. 6.

FIG. 6 is a schematic diagram illustrating an operation example of the determination unit 15B. As illustrated in FIG. 6, the determination unit 15B performs a demand forecasting of a product-in-progress corresponding to the first information, on the basis of the second information, such as the sales volume etc. and the weather forecast. Accordingly, it is possible to obtain a demand forecasting trend of the product-in-progress, such as time series data of estimated values of the number of received orders, for example.

As the demand forecasting as described above, it is possible to use a machine learning model. To train the machine learning model as described above, the sales volume etc. and the weather forecast, to which a ground truth label of the time series data of the estimated value of the number of received orders is assigned, may be used as training data. Specifically, by adopting the sales volume etc. and the weather forecast included in the training data as an explanatory variable of the machine learning model and adopting the ground truth label as a target variable of the machine learning model, it is possible to train the machine learning model in accordance with an arbitrary machine learning algorithm, such as deep learning, for example. Accordingly, a trained machine learning model is obtained. By inputting the sales volume etc. and the weather forecast to the trained machine learning model as described above, it is possible to obtain, as the demand forecasting trend, the time series data of the estimated value of the number of received orders that is output by the machine learning model. Meanwhile, as a matter of course, it is possible to generate the machine learning model for each product brand.

Subsequently, the determination unit 15B performs continuation determination on whether to continue to manufacture the product-in-progress on the basis of the demand forecasting trend of the product-in-progress. As one example, the determination unit 15B determines whether inclination of the demand forecasting trend of the product-in-progress indicates a declining trend. For example, if a sign of a slope of an approximation straight line that is obtained by regression analysis on the demand forecasting trend is negative, it is possible to identify that the trend is the declining trend. In this case, if the inclination of the demand forecasting trend of the product-in-progress indicates the declining trend, it is possible to forecast that a demand for the product-in-progress will decrease. In this case, discontinuation of manufacturing of the product-in-progress is determined. In contrast, if the inclination of the demand forecasting trend of the product-in-progress does not indicate the declining trend, continuation of manufacturing of the product-in-progress is determined.

As one aspect, a case in which discontinuation of manufacturing of the product-in-progress is determined will be described below. In this case, the determination unit 15B determines a change of a product to be manufactured by the plant 5 from the product-in-progress to a different product.

For example, if a product change is determined, the determination unit 15B inputs the process value of the first information to a simulator and causes the simulator to perform a simulation of a setting value that is to be changed by the field equipment 5b of the plant 5 in accordance with the product change.

Examples of the simulator as described above include a real time optimizer (RTO) that is one of online simulators for optimizing operation of the plant in real time. As one example, the RTO performs a simulation for simulating a behavior of the plant based on time series data of the process value of the first information, that is, what is called the process data, for each of cases in which different operating conditions are adopted. As a result of the simulation, an estimated value of the process data that is simulated for each of the cases is obtained as a control variable CV, and a profit of an objective function value is output by inputting the control variable CV to an objective function, for example. In this manner, the RTO calculates a ratio of variation of the control variable CV and variation of the profit, that is, a gain, by case studies for performing a simulation for each of the cases. Thereafter, the RTO calculates a CV target for which the profit reaches an optimal value, for example, a maximum value, by using the calculated gain. With use of the CV target calculated as described above, it is possible to calculate the manipulated variable MV corresponding to an input variable of a process or the setting value SV of a control system, such as the DCS, of the plant 5.

Here, the RTO as described above preforms a simulation based on the assumption that an stable state, that is a state in which an operating condition of the process is not being changed, is ensured. Therefore, the determination unit 15B inputs a process value to which a normal status is assigned to the simulator while eliminating a process value to which a status other than normal is assigned among pieces of process data corresponding to the first information, so that it is possible to determine the setting value of the plant.

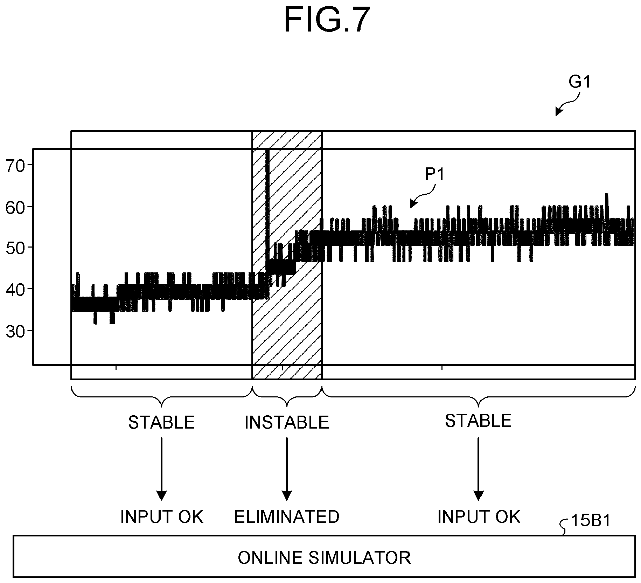

FIG. 7 is a schematic diagram illustrating an example of input of the process value to the simulator. FIG. 7 illustrates a graph G1 corresponding to the process data of the first information. As illustrated in FIG. 7, the plant 5 assigns a label of a status, as one example of the attribute information, to each process value that is included in the process data P1. Examples of the label include "normal (stable)", "abnormal", "instable", and "uncertain". As illustrated in FIG. 7, the determination unit 15B eliminates process values to which the labels other than the label of "normal" are assigned in the process data P1. In the example illustrated in FIG. 7, the process values to which the label of "instable" are eliminated from input targets. In contrast, the determination unit 15B inputs process values to which the labels of "normal" are assigned to an online simulator 15B1. By controlling input of the process values as described above, it is possible to prevent reduction in accuracy of the simulation performed by the online simulator 15B1, and improve the accuracy.

While the setting value is calculated as described above, the determination unit 15B determines a timing of reflecting the setting value in the plant 5. As one example, the determination unit 15B determines whether the inclination of the demand forecasting trend of the product-in-progress exceeds a threshold. In this case, if the inclination of the demand forecasting trend of the product-in-progress exceeds the threshold, it is possible to predict that the demand for the product-in-progress will rapidly decrease, so that immediate discontinuation of manufacturing of the product-in-progress is determined. In this case, the determination unit 15B determines the earliest timing, that is, what is called ASAP (as soon as possible), as the first condition. In contrast, if the inclination of the demand forecasting trend of the product-in-progress does not exceed the threshold, it is possible to predict that the demand for the product-in-progress will moderately increase. In this case, the determination unit 15B determines a timing after completion of manufacturing of the product-in-progress as the first condition.

The setting value and the first condition are determined as described above. Thereafter, the transmission unit 15C transmits the setting value and the first condition that are determined by the determination unit 15B to the plant 5 via the network N.

Meanwhile, in the first specific example as described above, the example has been described in which the plant value that is acquired from the plant 5 is input to the simulator, but embodiments are not limited to this example. For example, it may be possible to eliminate uncertain data and input different data to the simulator in order to compensate for the eliminated data. As one example, if the same process is duplicated in the plant 5, it may be possible to input a process value of a normal system, or if the same or similar device is provided for the sake of safety, it may be possible to input a process value of the same or similar device. In addition, it may be possible to generate data based on available different normal data. For example, as one example of the different normal data, data prior to or posterior to a pipe, a material balance, or the like may be adopted.

### Second specific example

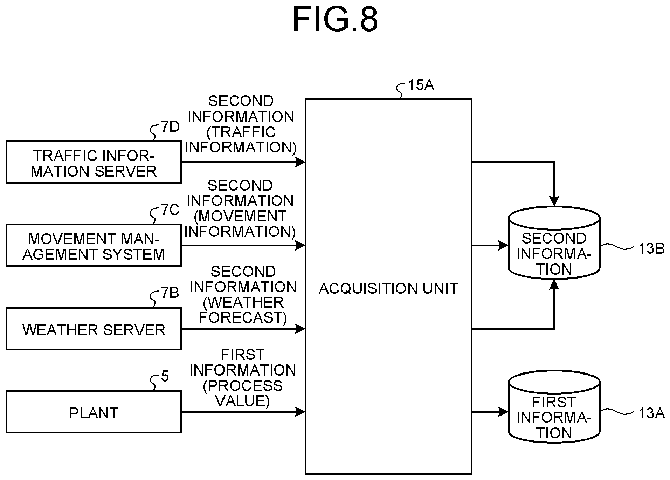

FIG. 8 is a schematic diagram illustrating an operation example of the acquisition unit 15A. FIG. 8 illustrates, as examples of the outer-plant source 7, a movement management system 7C that manages movement information on a moving body that transports a product manufactured by the plant 5 to a delivery destination and a traffic information server 7D that manages traffic information, such as a traffic volume on a road, in addition to the weather server 7B illustrated in FIG. 5.

As illustrated in FIG. 8, the acquisition unit 15A acquires, as one example of the first information, the process value or the like of the field equipment 5b from the plant 5. Information on the process value or the like that is acquired as described above is added to the first information 13A that is stored in the storage unit 13.

The acquisition unit 15A acquires, as one example of the second information, a weather forecast or the like from the weather server 7B. A target of the weather forecast that is acquired at this time may include all of matters related to a calendar that is published by the weather server 7B, may be narrowed down in a range that may affect manufacturing, or may be a difference from a target that is adopted at the time of previous access to the weather server 7B.

The acquisition unit 15A acquires, as another example of the second information, the movement information on the moving body from the movement management system 7C. The "moving body" described herein is not limited to all of vehicles, such as a tank truck, but may include a vessel, such as a tanker, or an aircraft. Furthermore, the "movement information" indicates location information on the moving body and a passenger in the moving body.

The acquisition unit 15A acquires, as still another example of the second information, the traffic information from the traffic information server 7D. The "traffic information" described herein may include a traffic volume, such as the number of moving vehicles or a traffic flow on a road network, or information on a traffic jam, an accident, or the like.

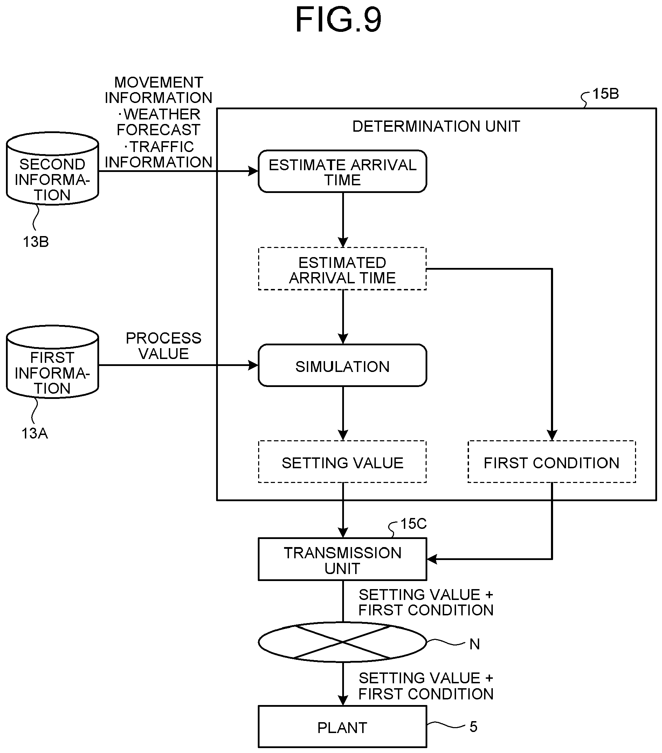

The information, such as the weather forecast, the movement information, and the traffic information, that is acquired as described above is added to the second information 13B that is stored in the storage unit 13. In the environment in which the first information and the second information as described above are acquired, the determination unit 15B determines the setting value and the first condition through operation illustrated in FIG. 9.

FIG. 9 is a schematic diagram illustrating an operation example of the determination unit 15B. As illustrated in FIG. 9, the determination unit 15B estimates a time at which the moving body for transporting the product manufactured by the plant 5 arrives at the delivery destination, on the basis of the second information, such as the weather forecast, the movement information, and the traffic information. The arrival time that is obtained as described above may be described as an "estimated arrival time". A timing corresponding to the estimated arrival time is determined as the first condition.

The arrival time as described above may be predicted by a general-purpose navigation function, an arbitrary device, such as an on-vehicle device, that is installed in the moving body, or a terminal including a mobile terminal, such as a smartphone. In addition, it may be possible to use a machine learning model even for prediction of the arrival time. As the machine learning model as described above, it may be possible to use graph neural networks (GNN) or the like. For example, by adopting the location information on the moving body as a point of departure, adopting the plant as a destination, and inputting traffic information on a road to the trained GNN, it is possible to determine a duration of a route that is output by the GNN as the estimated arrival time.

Furthermore, the determination unit 15B inputs the process value of the first information and an estimated manufacturing complete time corresponding to the estimated arrival time to the simulator. Accordingly, the simulator is caused to simulate a setting value with which a logistic cost and a plant operation cost are minimized when the plant 5 completes the manufacturing at the estimated arrival time.

The setting value and the first condition are determined as described above. Thereafter, the transmission unit 15C transmits the setting value and the first condition that are determined by the determination unit 15B to the plant 5 via the network N.

Meanwhile, the second specific example as described above is only one example. For example, the acquisition unit 15A may acquire, as the first information, an estimated manufacturing complete time of a product in progress (oil type) or a capacity margin of a storage facility (tank). Furthermore, the acquisition unit 15A may acquire, as the second information, information as described below in real time. For example, information on a traffic route (information on an accident, a traffic jam, enclosed sea, or the like) from a factory to a delivery destination may be acquired. In addition, operation information (a GPS position, an estimated arrival time, the number of vehicles, or a mounted product (oil type)) on a land transportation vehicle (tank truck) or operation information (a GPS position, port arrival and departure time, or a mounted product (oil type)) on a marine transportation vessel (tanker) may be acquired. In this case, the determination unit 15B is able to determine the first condition as described below by acquiring route search information, increasing a constraint condition of a solver, and adopting an optimized plan for delivery. Examples of the first condition include "request to postpone a loading time to °° time due to delay of delivery" and "request to optimize an operation plan for a plurality of plants and equipment at a designated estimated manufacturing complete time". The plant 5 that receives the setting value and the first condition as described above modifies the estimated manufacturing complete time for the equipment 5a of each of the plants 5, and reduces a production volume.

### Effects

As described above, the CI server 10 according to the present embodiment determines the setting value that is reflected in the plant 5, on the basis of the first information and the second information, so that it is possible to determine the setting value in accordance with a factor, such as an environment in which the plant 5 is installed, demand and supply conditions, or a change in material prices, that occurs outside the plant 5. Furthermore, the CI server 10 according to the present embodiment determines the first condition for reflecting the setting value in the plant 5, on the basis of the first information and the second information, so that it is possible to determine the first condition while taking into account not only a factor inside the plant 5, but also an influence of a factor outside the plant 5. Therefore, according to the CI server 10 of the present embodiment, it is possible to realize a more preferable operation state of the plant 5.

### Other embodiments

While the embodiments of the present invention have been described above, the present invention may be modified in various forms, and may be embodied in various different modes other than the embodiments as described above.

### Addition of second condition

The plant 5 may generate a second condition, such as a condition that is determined based on an internal state of the plant, based on information that is obtained inside the plant 5, and operate based on the setting value, the first condition, and the second condition.

Specifically, in the embodiments as described above, the plant operates based on the acquired setting value, the acquired first condition, and the acquired second condition. For example, in some cases, it may be difficult to change the setting value in the middle of processes in each of steps if the first to the third steps are being performed in the plant. As one example of the second condition in the case as described above, a condition of "after completion of processes in each of steps" may be adopted. Furthermore, if control of the processes is not stable, for example, at the time of instability, it may be difficult to change the setting value. As one example of the second condition in the case as described above, a condition that "a degree of stability of process control falls in a predetermined range" may be adopted.

### Scope of application

The integrated management system 1 illustrated in FIG. 1 and FIG. 2 may be adopted for optimization over a plurality of plants, in addition to a change of a product type in a single plant. In this case, it is possible to use information on the CI server 10, such as information on all of the plants 5 owned by a vendor, demand information (information on a demander if a delivery destination plant is present in an industrial complex or the like), information on an ecosystem or a supply chain. For example, it is possible to give a priority to a plant with good control performance, reduce the total number of times to stop the plant 5, and eliminate waste by association with transportation or ecosystem. In addition, it is possible to evaluate contribution to SDGs. Furthermore, it is possible to collectively operate the plurality of plants in an optimal manner while taking into account cloud information and current condition of the plant 5,in case such as a production plan, a change in the production plan, a defect in a specific plant, or stop.

### Numerical values etc.

The numbers of the plants, the equipment, the field equipment, the sensors, details of the integration process, and specific examples of the first information, the second information, the first condition, and the second condition of the embodiments as described above are mere examples, and may be changed. Furthermore, in the flowchart explained in the embodiment, the order of processes may be changed as long as no contradiction is derived.

### System

The processing procedures, control procedures, specific names, and information including various kinds of data and parameters illustrated in the above-described document and drawings may be arbitrarily changed unless otherwise specified. For example, the acquisition unit 15A, the determination unit 15B, and the transmission unit 15C may be configured by different devices.

Furthermore, the components of each of the devices illustrated in the drawings are functionally conceptual and do not necessarily have to be physically configured in the manner illustrated in the drawings. In other words, specific forms of distribution and integration of the devices are not limited to those illustrated in the drawings, and all or part of the devices may be functionally or physically distributed or integrated in arbitrary units depending on various loads or use conditions.

Moreover, for each processing function performed by each device, all or any part of the processing function may be implemented by a central processing unit (CPU) and a program analyzed and executed by the CPU or may be implemented as hardware by wired logic.

### Hardware

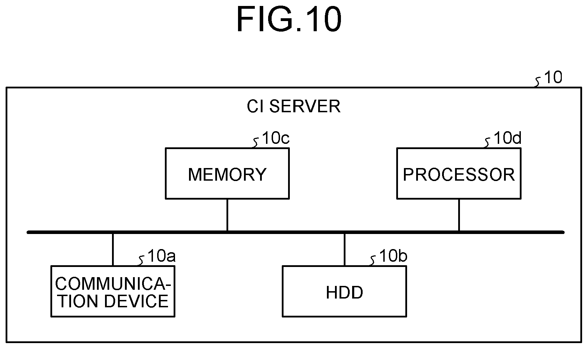

A hardware configuration example of a computer explained in the embodiment will be described below. FIG. 10 is a diagram for exampling the hardware configuration example. As illustrated in FIG. 10, the CI server 10 includes a communication apparatus 10a, a hard disk drive (HDD) 10b, a memory 10c, and a processor 10d. Further, all of the units illustrated in FIG. 10 are connected to one another via a bus or the like.

The communication apparatus 10a is a network interface card or the like, and communicates with a different server. The HDD 10b stores there in a program, a DB, or the like for operating the functions illustrated in FIG. 3.

The processor 10d reads a program for executing the same processes as the processing units illustrated in FIG. 3 from the HDD 10b or the like, loads the program onto the memory 10c, and executes the processes for implementing the functions illustrated in FIG. 3 and the like. For example, the processes implement the same functions as the processing units included in the CI server 10. Specifically, the processor 10d reads programs with the same functions as the acquisition unit 15A, the determination unit 15B, the transmission unit 15C, and the like from the HDD 10b or the like. Further, the processor 10d performs a process for implementing the same processes as the acquisition unit 15A, the determination unit 15B, the transmission unit 15C, and the like.

In this manner, the CI server 10 functions as an information processing apparatus that reads the program and executes the program to implement the plant control method. Furthermore, the CI server 10 is able to implement the same functions as the embodiment as described above by causing a medium reading device to read the above-described program from a recording medium and executing the read program. Meanwhile, the program described in the other embodiments need not always be executed by the CI server 10. For example, even when a different computer or a different server executes the program or when the different computer and the different server execute the program in a cooperative manner, the present invention may be applied in the same manner.

The program may be distributed via a network, such as the Internet. Furthermore, the program may be recorded in a computer readable recording medium, such as a hard disk, a flexible disk (FD), a compact disk-ROM, a magneto-optical disk (MO), or a digital versatile disc (DVD), and may be executed by being read from the recording medium by a computer.

## Claims

1. A plant system(1) that includes a plant(5) and a cloud server(10), the cloud server(10) comprising:
an acquisition unit(15A) configured to acquire first information(13A) from the plant and acquire second information(13B) from a source other than the plant;
a determination unit(15B) configured to determine a setting value of the plant and a first condition for reflecting the setting value in the plant based on the first information(13A) and the second information(13B); and
a transmission unit(15C) configured to transmit the setting value and the first condition to the plant, wherein the plant(5) operates based on the setting value and the first condition.

2. The plant system according to claim 1, wherein the plant(5) generates a second condition based on information that is obtained inside the plant, and operates based on the setting value, the first condition, and the second condition.

3. The plant system according to claim 1 or 2, wherein
the first information(13A) includes a process value of a device that is used for operation of the plant and a status of the device, the status being assigned to the process value, and
the determination unit(15B) determines the setting value of the plant by eliminating a process value to which a status indicating other than normal is assigned and inputting a process value to which a status indicating the normal is assigned to a simulator.

4. The plant system according to any one of claims 1 to 3, wherein
the second information(13B) includes information on one of a sales volume of a product that is manufactured by operation of the plant, a demand forecasting of a product that is manufactured by operation of the plant, and a weather forecast, and
the determination unit(15B) determines, as the first condition, a timing at which the plant performs change from manufacturing of a first product to manufacturing of a second product that is different from the first product based on inclination of a declining trend of one of a sales volume of the first product being in progress, a demand forecasting of the first product being in progress, a sales volume of the first product, and a demand forecasting of the first product, the sales volume and the demand forecasting being obtained from the weather forecast.

5. The plant system according to any one of claims 1 to 3, wherein
the second information(13B) includes movement information on a transportation moving body that transports a product that is manufactured by operation of the plant to a delivery destination, and
the determination unit(15B) determines, as the first condition, an estimated manufacturing complete time of the plant corresponding to an estimated arrival time with respect to a pickup point for the product, the estimated arrival time being obtained from the movement information on the transportation moving body, and determines the setting value of the plant by inputting the estimated manufacturing complete time of the plant to a simulator.

6. A plant control method comprising:
acquiring(S101), by a cloud server(10), first information(13A) from a plant;
acquiring(S102), by the cloud server(10), second information(13B) from a resource other than the plant;
determining(S105,S106), by the cloud server(10), a setting value of the plant and a first condition for reflecting the setting value in the plant based on the first information(13A) and the second information(13B);
transmitting(S107), by the cloud server(10), the setting value and the first condition to the plant, and
operating, by the plant(5), based on the setting value and the first condition.

7. A plant control program that causes a cloud server(10) to execute a process comprising:
acquiring(S101) first information(13A) from a plant(5);
acquiring(S102) second information(13B) from a resource other than the plant(5);
determining(S105,S106) a setting value of the plant and a first condition for reflecting the setting value in the plant based on the first information(13A) and the second information(13B); and
transmitting(S107) the setting value and the first condition to the plant(5).
